(19) Europäisches Patentamt
European Patent Office
Office européen des brevets

(11) Numéro de publication : **0 443 294 B1**

(12) **FASCICULE DE BREVET EUROPEEN**

(45) Date de publication du fascicule du brevet : **04.08.93 Bulletin 93/31**

(51) Int. Cl.$^5$ : **G04C 3/14,** H02P 8/00

(21) Numéro de dépôt : **90810137.1**

(22) Date de dépôt : **23.02.90**

# (54) Procédé d'alimentation d'un moteur pas à pas monophasé.

(43) Date de publication de la demande : **28.08.91 Bulletin 91/35**

(45) Mention de la délivrance du brevet : **04.08.93 Bulletin 93/31**

(84) Etats contractants désignés : **AT BE CH DE ES FR GB GR IT LI LU NL SE**

(56) Documents cités :
**EP-A- 0 097 350**
**EP-A- 0 345 224**
**GB-A- 2 006 995**

(73) Titulaire : **DETRA SA**
**35, Rue Scholl**
**CH-2504 Bienne (CH)**

(72) Inventeur : **Tu, Mai Xuan**
**Chiésaz 13**
**CH-1024 Ecublens (CH)**
Inventeur : **Schwab, Michel**
**Rue du Cornouiller 4**
**CH-2502 Bienne (CH)**

(74) Mandataire : **Fischer, Franz Josef et al**
**BOVARD SA Ingénieurs-Conseils ACP**
**Optingenstrasse 16**
**CH-3000 Bern 25 (CH)**

**EP 0 443 294 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention a pour objet un procédé d'alimentation d'un moteur pas à pas, notamment pour pièce d'horlogerie, selon le préambule de la revendication 1.

Plusieurs types d'alimentation de moteurs pas à pas pour montres à quartz sont connus. Dans le brevet suisse CH-B- 634194, il a été décrit un procédé d'alimentation dans lequel le moteur est alimenté par une impulsion de durée et d'amplitude constantes. Ce procédé a comme inconvénient une grande consommation d'énergie car l'impulsion d'alimentation n'est pas adaptée à la charge réelle du moteur. D'autres solutions ont été apportées, permettant d'adapter l'alimentation du moteur en fonction de la charge. Dans le brevet français EP-A- 0 021 320, un procédé d'alimentation a été décrit; cependant cette solution présente l'inconvénient de devoir utiliser un circuit analogique de détection du pas raté et un circuit logique de correction assez compliqué. Dans la demande de brevet EP-A- 0 345 224, un nouveau procédé d'alimentation de moteurs pas à pas a été proposé. Ce procédé permet de fournir au moteur des impulsions de tension de durée variable en fonction de la charge avec des moyens mis en oeuvre relativement simples. Des essais récents sur ce mode d'alimentation ont mis en évidence qu'il était possible d'apporter des améliorations à ce procédé afin de réduire la consommation d'énergie du moteur. C'est le but de la présente invention de proposer un procédé d'alimentation d'un moteur pas à pas permettant de réaliser un gain de consommation plus important. Le but est atteint grâce aux mesures figurant dans la partie caractérisante de la revendication 1.

L'invention sera mieux comprise à la lecture de la description qui suit, en se référant aux dessins annexés, dans lesquels :

- la figure 1 représente le dessin de principe d'un moteur pas à pas du type monophasé bipolaire;
- la figure 2 représente le diagramme de couples statiques d'un moteur pas à pas du type précité;
- la figure 3 représente un type d'impulsions d'alimentation de ce moteur;
- la figure 4a représente le courant et la tension appliqués au moteur selon le procédé d'alimentation prévu par l'invention, le moteur n'étant pas chargé par un couple mécanique;
- la figure 4b représente le courant et la tension appliqués au moteur selon le même procédé d'alimentation de la figure 4a, mais le moteur étant chargé par une couple mécanique;
- la figure 5 représente la variation du courant pendant l'intervalle de temps $T_{5i}$ séparant deux impulsions partielles;
- la figure 6 représente le schéma bloc d'un exemple de réalisation du procédé d'alimentation selon l'invention;
- la figure 7 représente le détail de l'élément du schéma bloc de la figure 6;
- la figure 8 représente le détail de l'élément du schéma bloc de la figure 6.

La figure 1 représente de manière schématique une exécution de principe d'un moteur pas à pas du type monophasé, bipolaire. Ce moteur est constitué d'un rotor comportant un aimant permanent cylindrique 1 à aimantation diamétrale, d'un stator comportant une bobine 2, un noyau de bobine 3 et les pièces polaires 4a et 4b réalisées en matériau ferromagnétique doux.

La figure 2 représente les couples agissant sur le rotor du moteur en fonction de la position angulaire .Le couple de positionnement $T_a$ est dû à l'interaction entre l'aimant et la géométrie des pièces polaires statoriques. Le couple mutuel $T_{ab}$ est dû à l'interaction entre le champ créé par la bobine lorsque celle-ci est alimentée. Le couple $T_m$ représente la somme de tous les couples d'origine mécanique agissant sur le rotor. Cette figure montre que les couples $T_a$ et $T_{ab}$ sont déphasés d'un angle d'environ 45 degrés. Au repos, le rotor est positionné initialement au point $S_1$ grâce au couple $T_a$. Lorsqu'une impulsion de tension est envoyée à la bobine, le rotor se déplace en direction de $S_2$ sous l'action du couple $T_{ab}$.

A l'ordinaire, la bobine du moteur est alimentée par une impulsion à tension et à durée constantes, comme l'illustre la figure 3. La durée de l'impulsion est choisie suffisamment longue, de façon à permettre au moteur de franchir le pas dans les conditions défavorables comme, par exemple, dans le cas d'une chute de tension de la pile, ou encore dans le cas d'une augmentation du couple mécanique $T_m$. Cependant, la plupart du temps, le moteur n'est pas chargé et fonctionne à sa tension nominale; la durée constante et suffisamment longue présente de ce fait une perte d'énergie inutile dans les conditions de fonctionnement normales.

La figure 4a représente le courant et la tension appliqués à la bobine du moteur, selon le procédé d'alimentation prévu par la présente invention, le moteur n'étant par chargé par un couple mécanique.

L'impulsion de tension hachée de durée totale $T_7$ est formée par une impulsion partielle de durée $T_4$ et 11 impulsions partielles de durée variable $T_{6i}$, séparées par des intervalles de temps $T_{51}$, $T_{52}$ --- $T_{5i}$ de durée variable. La succession des impulsions partielles se fait de la façon suivante : initialement, la bobine du moteur est alimentée par une impulsion de tension constante de durée $T_4$ de 0,8 ms, le courant dans la bobine augmente de zéro à la valeur $i_1$, selon l'équation de tension :

$$U = R.i + L . di/dt + K.\Omega \quad (1)$$

dans laquelle :

U = tension appliquée
L = inductance
i = courant
t = temps
K = facteur de couplage exprimant la variation du flux mutuel entre l'aimant et la bobine
Ω = vitesse angulaire

Après cette première impulsion partielle de tension, c'est-à-dire à partir de $t = T_4$, la bobine du moteur est mise en court-circuit. Le courant dans la bobine varie, à partir de cet instant, selon l'équation :

$$0 = R.i + L . di/dt + K.\Omega \quad (2)$$

Lorsque ce courant décroît jusqu'à une valeur de référence $I_{réf}$, c'est-à-dire à l'instant $t = T_4 + T_{51}$, la bobine est de nouveau alimentée par une deuxième impulsion partielle de tension constante, de durée $T_{61}$ égale à la durée de mise en court-circuit $T_{51}$ qui la précède. Le courant dans la bobine pendant la durée $T_{61}$ augmente de la valeur $I_{réf}$ à la valeur $i_2$ et la bobine du moteur est de nouveau mise en court-circuit à l'instant $t = T_4 + T_{51} + T_{61} = T_4 + 2\ T_{51}$ et ainsi de suite. Pour ce cas de fonctionnement, c'est-à-dire lorsque le moteur n'est pas chargé, la durée totale $T_7$ de l'impulsion hachée est de 4,8 ms et la consommation du moteur est de 0,65 μAs.

La figure 4b représente le courant et la tension appliqués au moteur selon le même procédé d'alimentation que celui de la figure 4a, mais le moteur est chargé par un couple mécanique de 0,2 μNm. La durée totale de l'impulsion $T_7$ passe de 4,8 du cas précédent à 10,8 ms du cas présent et la consommation du moteur dans le cas présent est de 1,7 μAs. Il existe donc une adaptation automatique de la durée totale de l'impulsion en fonction de la charge du moteur, et c'est grâce à cette adaptation que le procédé d'alimentation selon l'invention permet d'économiser l'énergie fournie par la pile.

La figure 5 représente la variation du courant pendant l'intervalle de temps $T_{5i}$ séparant deux impulsions partielles de tension. La bobine du moteur étant mise en court-circuit pendant cet intervalle de temps, on obtient par conséquent à partir de l'équation (2) :

$$T5i \approx \frac{L.\Delta i}{R.im + K.\Omega} \quad (3)$$

L'équation (3) montre que la durée de l'intervalle de temps $T_{5i}$ dépend de la vitesse de rotation du moteur. Une augmentation du couple mécanique du moteur provoque une diminution de la vitesse de rotation Ω , ce qui entraînera une augmentation de l'intervalle $T_{5i}$.

La durée totale $T_7$ de l'impulsion hachée est donnée par

$$T7 = T4 + 2 \cdot \sum_{i=1}^{n} T5i \quad (4)$$

Dans cette équation, n représente le nombre total d'impulsions partielles de durée $T_{6i}$ (n = 11 dans l'exemple illustré dans les figures 4a et 4b).

Les équations (3) et (4) permettent d'expliquer l'adaptation de la longueur d'impulsion en fonction de la charge par le procédé d'alimentation proposé par la présente invention.

La figure 6 représente le schéma bloc d'un exemple de réalisation du procédé d'alimentation selon l'invention. Le signal de base de temps provenant de l'oscillateur Q est envoyé au circuit de division et de mise en forme 10, à la sortie duquel on obtient la période d'alimentation $T_o$ du moteur et la période de base $T_B$ de l'oscillateur. Les signaux $T_o$, $T_B$, ainsi que le signal C à la sortie du comparateur 12 sont envoyés dans le circuit logique 11, lequel fournit à l'étage de sortie (Driver) 14 les signaux de commande $D_1$, $D_2$, $D_3$, $D_4$.

Une résistance de mesure r est branchée en série avec le moteur M à la sortie du Driver 14 et le bloc de mesure 13 transforme la tension aux bornes de la résistance de mesure r en un signal donnant l'image du courant i avant de l'envoyer au comparateur 12.

La figure 7 représente une variante d'exécution de l'élément 11 du schéma bloc de la figure 6. La période de base du quartz et la période d'alimentation $T_o$ du moteur sont fournies à l'entrée du compteur 20 permettant de fixer la largeur de la première impulsion partielle de durée $T_4$. La sortie du compteur 20 est reliée à une des 2 entrées de la porte "OU" 21. La sortie de la porte "OU" 21 actionne la fonction de comptage du "COMPTEUR-DECOMPTEUR" 22. Le signal C provenant du comparateur 12 de la figure 6 actionne en même temps la fonction de décomptage du "COMPTEUR-DECOMPTEUR" 22 et l'enclenchement (Set) "S" de la bascule D 24. La remise à zéro (reset) "R" de la bascule D 24 est commandée à travers la porte "OU" 23 par les signaux de sortie du compteur 20 et le signal de fin de décomptage F du "COMPTEUR-DECOMPTEUR" 22. La sortie $Q_D$ de la bascule D passe par un circuit logique classique 25 pour délivrer les signaux de commande

$D_1$, $D_2$, $D_3$, $D_4$.

La figure 8 représente le détail de l'élément 14 (Driver) du schéma bloc de la figure 6. Les transistors de sortie 31, 32, 33, 34 sont montés en pont en H et commandés par les signaux $D_1$, $D_2$, $D_3$, $D_4$ provenant du circuit 25.

## Revendications

1. Procédé d'alimentation d'un moteur pas à pas monophasé pour pièce d'horlogerie, adapté pour fournir au moteur des impulsions de tension hachée de durée $T_7$ variables en fonction des conditions de charge et en fonction de la tension d'alimentation du moteur, caractérisé en ce que l'on agit pour que chaque dite impulsion de tension hachée soit composée d'une première impulsion partielle de tension de durée $T_4$ et d'une suite d'impulsions partielles de tension de même polarité que celle de la première impulsion partielle et de durée variable $T_{6i}$, et pour que les intervalles de temps $T_{5i}$ séparant les dites impulsions partielles de tension soient variables en fonction des conditions de charge et en fonction de la tension d'alimentation du moteur et pour que chaque durée variable $T_{6i}$ soit proportionnelle à l'intervalle de temps $T_{5i}$ qui la précède.

2. Procédé selon la revendication 1, caractérisé en ce que pendant les dits intervalles de temps $T_{5i}$, la bobine du moteur est mise en court-circuit.

3. Procédé selon les revendications 1 et 2, caractérisé en ce que chaque dit intervalle de temps $T_{5i}$ est délimité par la fin d'une dite impulsion partielle de durée $T_4$ ou de durée $T_{6i}$ et par l'instant suivant cette fin où le courant de la bobine du moteur est plus petit ou égal à une valeur de référence $I_{réf}$.

4. Procédé selon les revendications 1, 2 et 3, caractérisé en ce que la dite impulsion hachée est composée d'un nombre constant d'impulsions partielles.

5. Procédé selon les revendications 1, 2 et 3, caractérisé en ce que la dite impulsion hachée est interrompue lorsque le dit intervalle de temps $T_{5i}$ dépasse une valeur de référence $T_{réf}$.

6. Procédé selon les revendications 1, 2 et 3 ou selon les revendications 1, 2 et 4, caractérisé en ce que la bobine du moteur est mise en court-circuit entre deux dites impulsions hachées.

7. Procédé selon la revendication 6, caractérisé en ce que deux impulsions hachées successives de durée $T_7$ sont de même polarité ou de polarités opposées.

## Patentansprüche

1. Speiseverfahren für Monophasenschrittmotor für Uhren, geeignet um einem Motor zerhackte Spannungsimpulse der Dauer $T_7$, die in Funktion der Ladung und in Funktion der Nutzspannung des Motors variabel sind, zuzuführen, dadurch gekennzeichnet, dass bewirkt wird, dass jeder der genannten zerhackten Spannungsimpulse aus einem ersten partiellen Spannungsimpuls der Dauer $T_4$ und einer Folge von partiellen Spannungsimpulsen mit gleicher Polarität wie der erste partielle Spannungsimpuls und der Dauer $T_{6i}$ zusammengesetzt ist, und dass die Zeitintervalle $T_{5i}$, welche die genannten partiellen Spannungsimpulse trennen, in Funktion der Ladungsbedingungen und in Funktion der Spannungsspeisung des Motors variabel sind, und dass jede variable Dauer $T_{6i}$ dem Zeitintervall $T_{5i}$ proportional ist, das diesem vorangeht.

2. Verfahren nach Anspruch 1, dadurch gekennzeichnet, dass während der genannten Zeitintervalle $T_{5i}$ die Motorwicklung kurzgeschlossen wird.

3. Verfahren nach den Ansprüchen 1 und 2, dadurch gekennzeichnet, dass jedes der genannten Zeitintervalle $T_{5i}$ durch das Ende von einem der genannten partiellen Impulse der Dauer $T_4$ oder der Dauer $T_{6i}$ und durch den diesem Ende folgenden Zeitpunkt begrenzt wird, wo der Strom der Motorwicklung kleiner oder gleich einem Referenzwert $I_{ref}$ ist.

4. Verfahren nach den Ansprüchen 1, 2 und 3, dadurch gekennzeichnet, dass der genannte zerhackte Impuls aus einer konstanten Anzahl von partiellen Impulsen zusammengesetzt ist.

5. Verfahren nach den Ansprüchen 1, 2 und 3, dadurch gekennzeichnet, dass der genannte zerhackte Impuls unterbrochen ist, während das genannte Zeitintervall $T_{5i}$ einen Referenzwert $T_{ref}$ übersteigt.

6. Verfahren nach den Ansprüchen 1, 2 und 3 oder nach den Ansprüchen 1, 2 und 4, dadurch gekennzeichnet, dass die Motorwicklung zwischen zwei der genannten zerhackten Impulse kurzgeschlossen wird.

7. Verfahren nach Anspruch 6, dadurch gekennzeichnet, zwei aufeinanderfolgende zerhackte Impulse der Dauer $T_7$ von gleicher Polarität oder entgegengesetzter Polarität sind.

## Claims

1. Method for feeding a monophase stepping motor for a timepiece, adapted to supply the motor with chopped-voltage pulses of variable duration $T_7$ as a function of the load conditions and as a function of the feed voltage of the motor, characterized in that it acts so that each pulse of chopped voltage is composed of a first partial voltage pulse of duration $T_4$ and of a train of partial voltage pulses of the same polarity as that of the first partial pulse and of variable duration $T_{6i}$, and so that the intervals of time $T_{5i}$ separating the said partial voltage pulses are variable as a function of the load conditions and as a function of the feed voltage of the motor, and so that each variable duration $T_{6i}$ is proportional to the interval of time $T_{5i}$ which precedes it.

2. The method according to claim 1, characterized in that the coil of the motor is short-circuited during said intervals of time $T_{5i}$.

3. The method according to claims 1 and 2, characterized in that each said interval of time $T_{5i}$ is delimited by the end of a said partial pulse of duration $T_4$ or of duration $T_{6i}$ and by the moment following this end when the current of the coil of the motor is equal to or less than a reference value $I_{ref}$.

4. The method according to claims 1, 2 and 3, characterized in that said chopped pulse is composed of a constant number of partial pulses.

5. The method according to claim 1, 2 and 3, characterized in that said chopped pulse is interrupted when said interval of time $T_{5i}$ exceeds a reference value $T_{ref}$.

6. The method according to claims 1, 2, and 3 or according to claims 1, 2 and 4, characterized in that the coil of the motor is short-circuited between two said chopped pulses.

7. The method according to claim 6, characterized in that two successive chopped pulses of duration $T_7$ are of the same polarity or of opposite polarities.

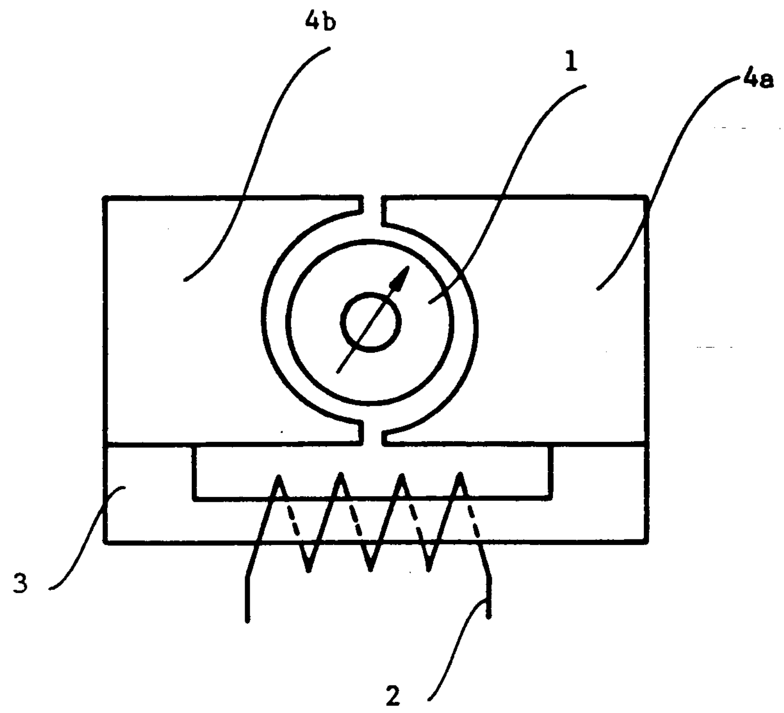


Figure 1

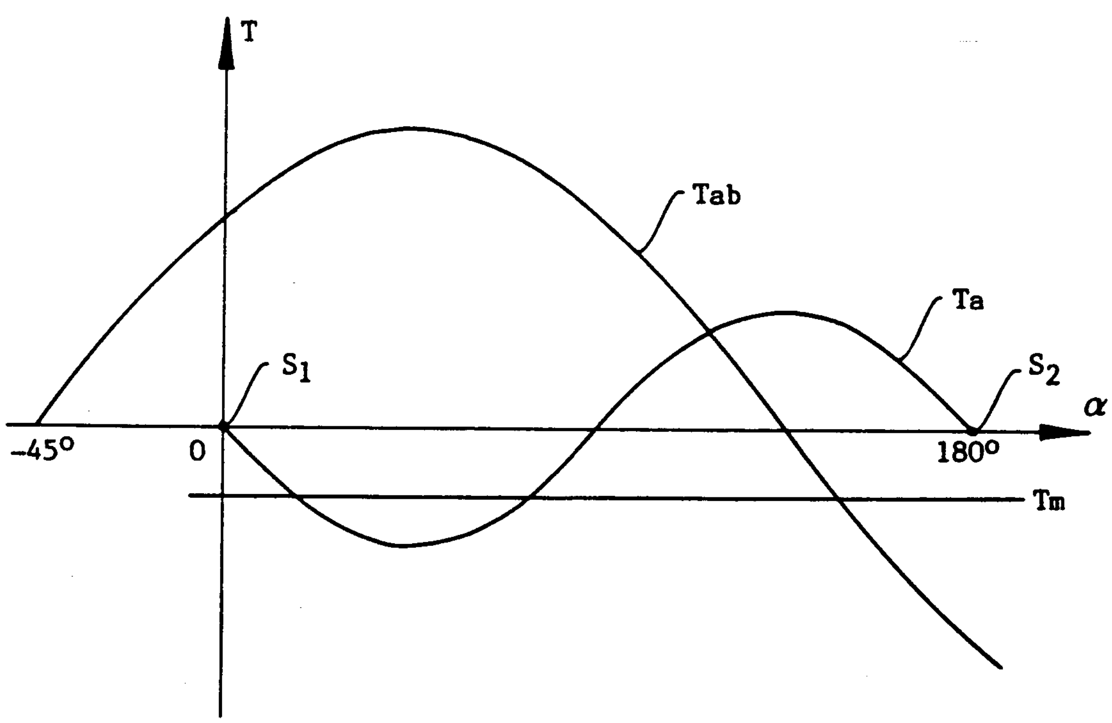


Figure 2

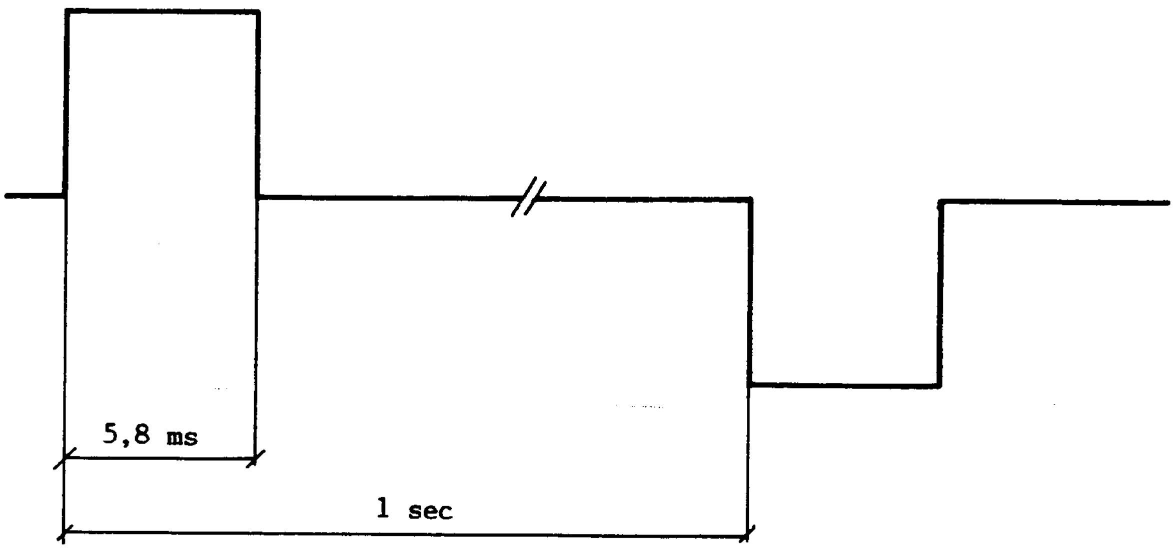


Figure 3

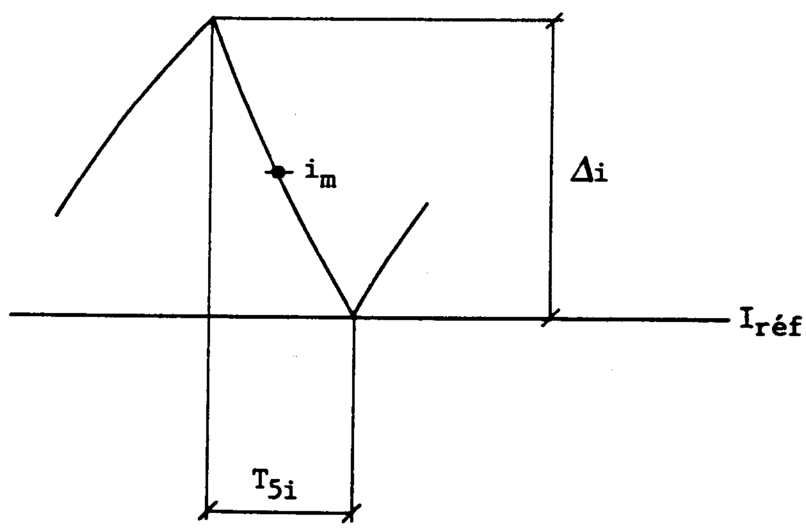


Figure 5

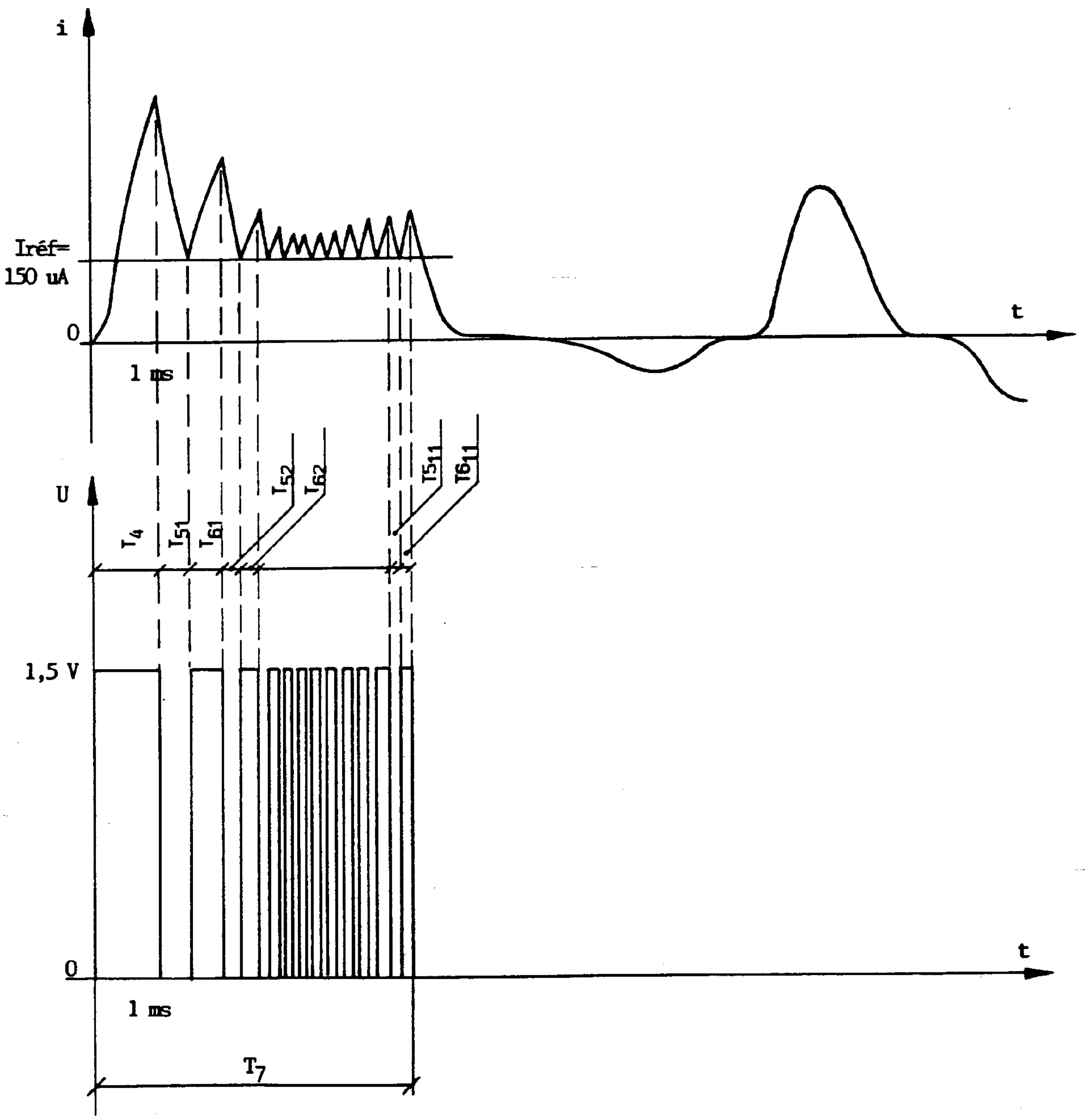


Figure 4a

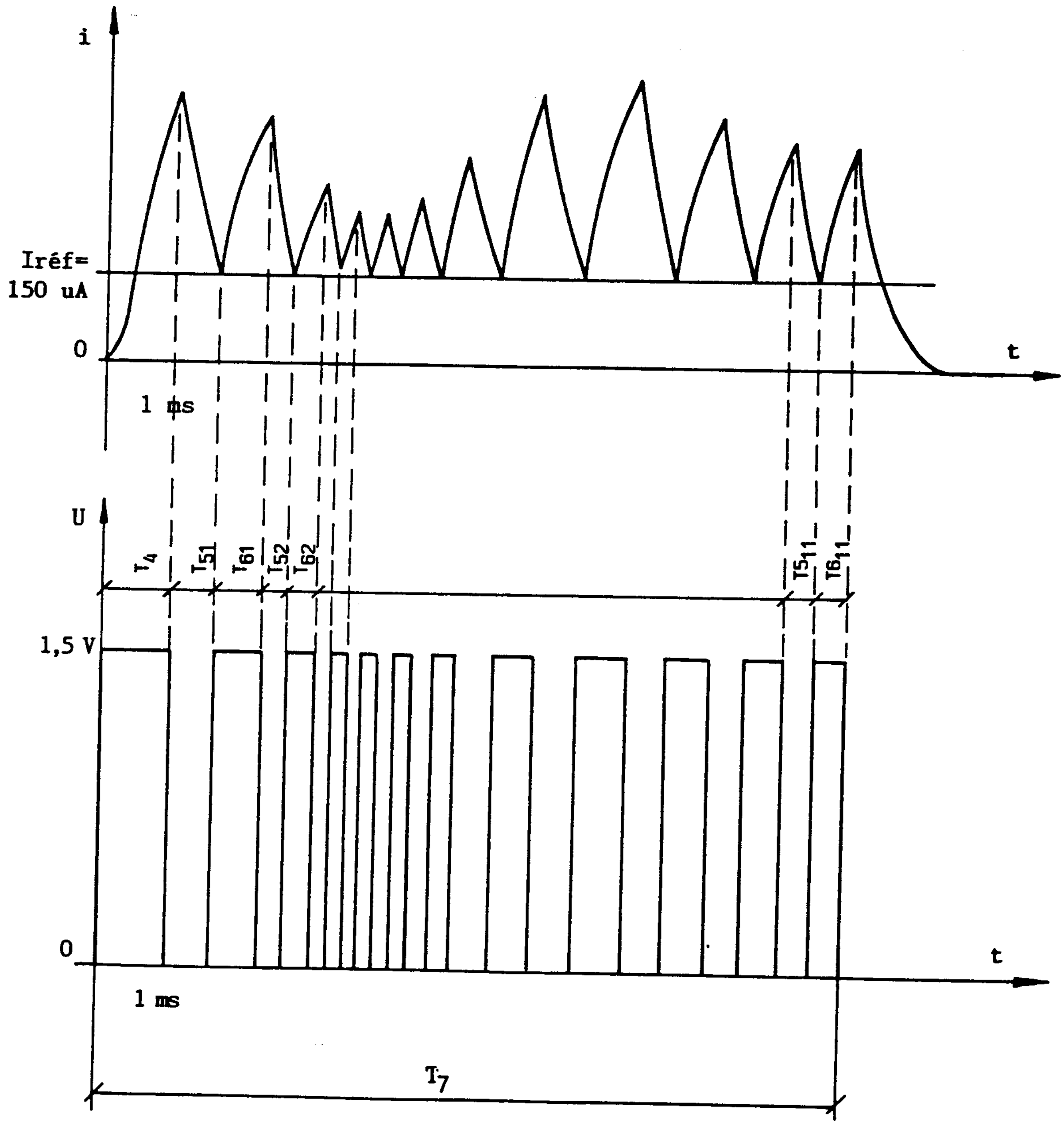


Figure 4b

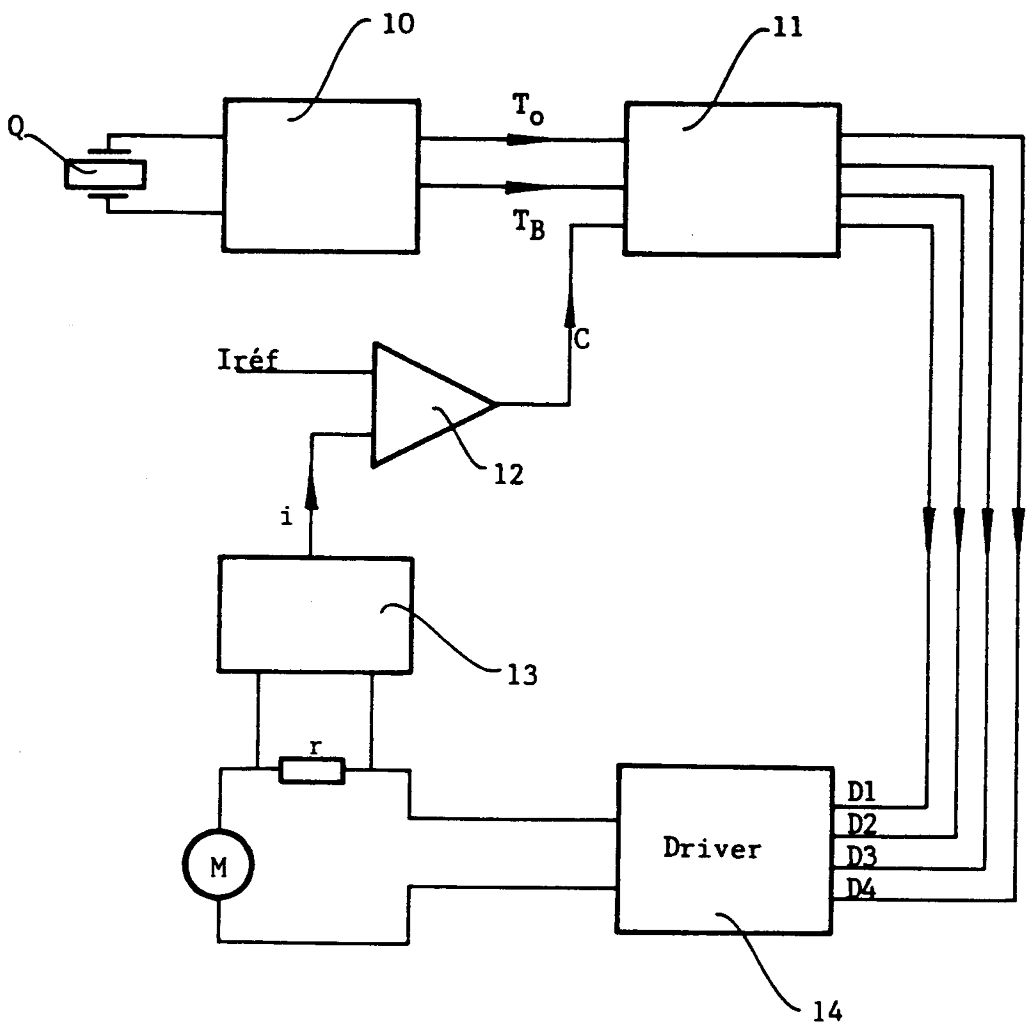


Figure 6

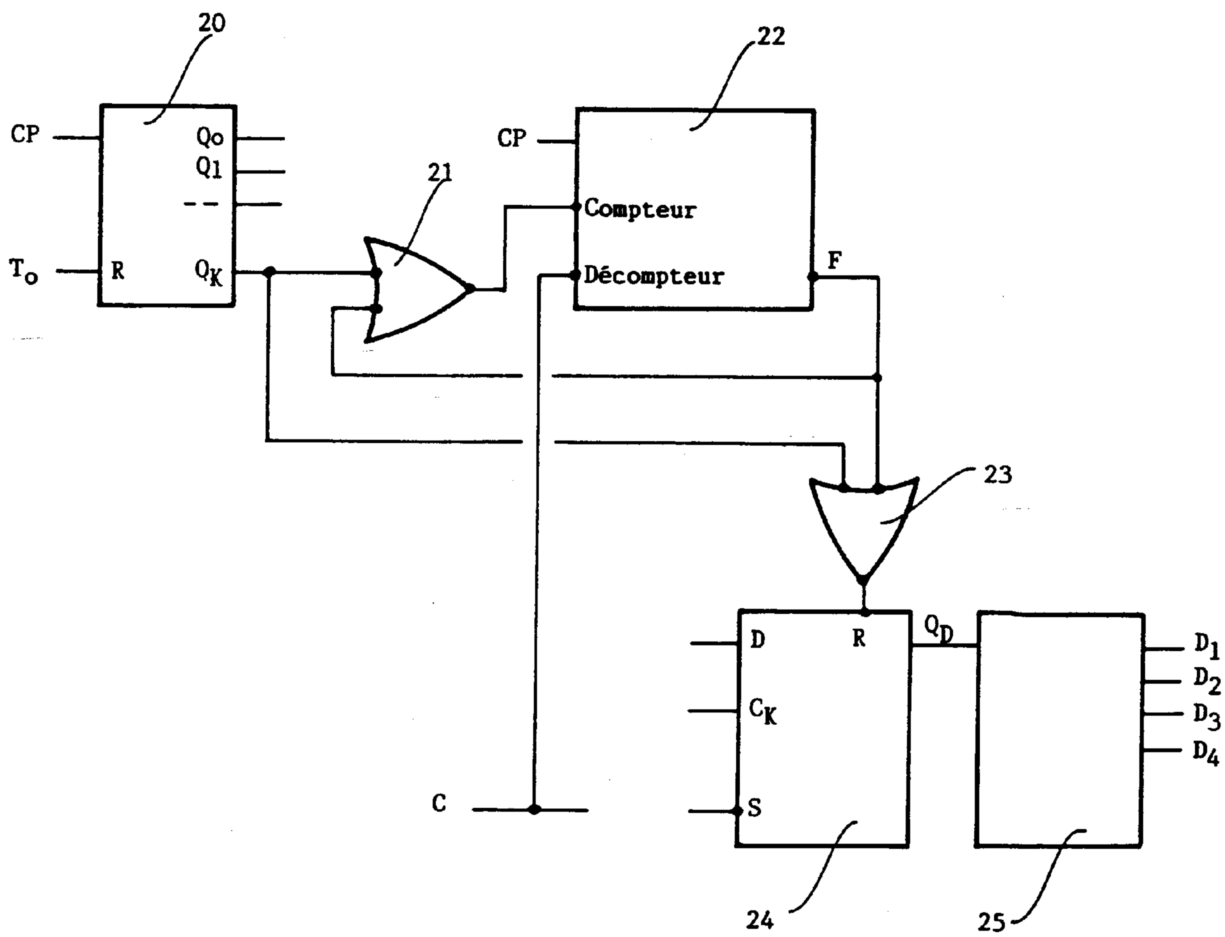
20
22
21
23
24
25
CP
Qo
Q1
To
R
QK
CP
Compteur
Décompteur
F
C
D
R
QD
CK
S
D1
D2
D3
D4

Figure 7

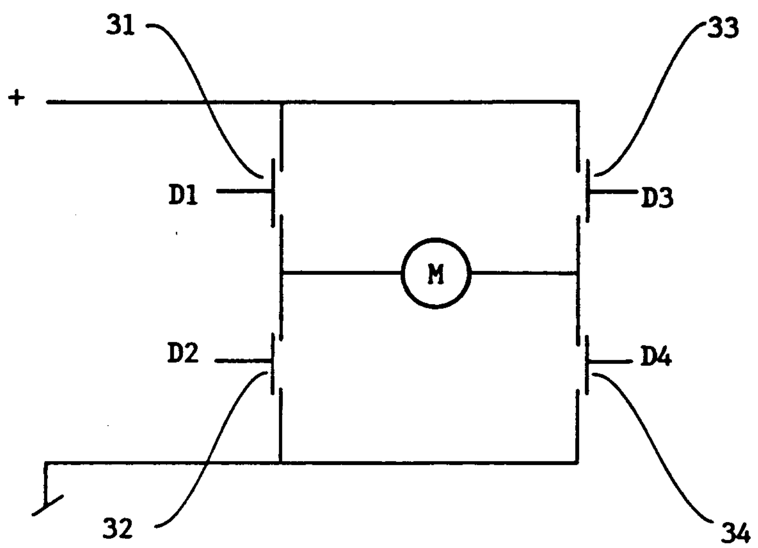


Figure 8